# EUROPÄISCHE PATENTANMELDUNG

(11) **EP 3 628 556 A1**
(43) Veröffentlichungstag der Anmeldung: **01.04.2020**
(21) Anmeldenummer: 19199131.4
(22) Anmeldetag: 24.09.2019
(51) Int. Cl.: B60T 8/32

(54) **BREMSEINRICHTUNG MIT AKTIVER BREMSKRAFTEINSTELLUNG**

(30) Priorität: 27.09.2018 DE 102018216563
(71) Anmelder: Robert Bosch GmbH, 70442 Stuttgart (DE)
(72) Erfinder: Klug, Silas, 71106 Magstadt (DE); Moia, Alessandro, 71088 Holzgerlingen (DE)

(57) **Zusammenfassung**

Die vorliegende Erfindung betrifft eine Bremseinrichtung mit aktiver Bremskrafteinstellung für ein Zweirad (1) oder dergleichen, umfassend eine Gebereinrichtung (4) mit einem Geberkolben (41), einem Zylinder (40) und einem Aktuatorkolben (42), ein Hydrauliksystem (5) zur Übertragung eines Fluiddrucks von der Gebereinrichtung (4) zu einem Radbremssystem (6), ein Bremshebel (3), welcher mit dem Geberkolben (41) verbunden ist, ein Aktuator (7), welcher mit dem Aktuatorkolben (42) zur Betätigung des Aktuatorkolbens (42) verbunden ist und eine Steuereinheit (10), welche eingerichtet ist, den Aktuator (7) in Abhängigkeit von einer Erkennung eines Fahrzustandes des Zweirads zu aktivieren, um einen Bremsdruck im Hydrauliksystem (5) zu regeln.

## Beschreibung

### Stand der Technik

Die vorliegende Erfindung betrifft eine Bremseinrichtung mit einer aktiven Bremskrafteinstellung für ein Zweirad oder dergleichen, wobei die Bremskrafteinrichtung insbesondere ein ABS-System und/oder ein Berganfahrsystem realisieren kann, sowie ein Verfahren zur Bremsdruckregelung eines Zweirads.

Bremssysteme für Zweiräder sind aus dem Stand der Technik in unterschiedlichen Ausgestaltungen bekannt. Hierbei sind bei Motorrädern und Fahrrädern, insbesondere auch bei Elektrofahrrädern, Bremssysteme mit Hydrauliksystemen im Einsatz. Insbesondere bei Fahrrädern sollten aufgrund der Gewichtsproblematik derartige Bremseinrichtungen möglichst gewichtsoptimiert ausgestaltet sein. Weiterhin werden im Stand der Technik Zweiräder verstärkt mit ABS-Systemen zur Erhöhung der Sicherheit beim Bremsen eingesetzt. Hierbei ist beispielsweise aus der DE 102010038525 eine Bremsvorrichtung mit einem ABS-System bekannt, bei dem ein Piezostack im Hydrauliksystem verwendet wird. Weiterhin wäre es wünschenswert, auch Zweiräder mit einem sogenannten Berganfahrassistenten auszurüsten, welcher bei einem Anfahren an einem Berg verhindert, dass das Zweirad zurückrollt. Derartige Systeme sind aus dem Kraftfahrzeugsektor bekannt, jedoch aufgrund ihrer Komplexizität nicht für einen Einsatz bei Zweirädern geeignet.

### Offenbarung der Erfindung

Die erfindungsgemäße Bremseinrichtung mit aktiver Bremskrafteinstellung für Zweiräder oder dergleichen mit den Merkmalen des Anspruchs 1 weist demgegenüber den Vorteil auf, dass eine sehr kompakte und kleinbauende ABS-Funktion in die Bremseinrichtung integriert werden kann. Weiterhin kann erfindungsgemäß eine Berganfahrhilfe realisiert werden, indem die Bremseinrichtung eingerichtet ist, die Bremsen des Zweirads bei einem Anfahren an einen Berg zu blockieren und so ein Zurückrollen zu vermeiden.

Hierbei ist die erfindungsgemäße Bremseinrichtung besonders energieeffizient und benötigt nur eine kleine Anzahl von Bauteilen. Ferner ist eine einfache Wartung der Bremseinrichtung und insbesondere auch eine einfache Entlüftung des Bremssystems möglich.

Dies wird erfindungsgemäß dadurch erreicht, dass die Bremseinrichtung eine Gebereinrichtung mit einem Geberkolben, einem Zylinder und einem Aktuatorkolben umfasst. Ferner ist ein Hydrauliksystem zur Übertragung eines Fluiddrucks von der Gebereinrichtung zu einem Radbremssystem vorgesehen. Das Radbremssystem umfasst vorzugsweise einen Bremskolben und eine Bremsscheibe. Ferner umfasst die Bremseinrichtung einen Bremshebel, welcher mit dem Geberkolben verbunden ist und einen Aktuator zur Betätigung des Aktuatorkolbens. Die Bremseinrichtung umfasst weiterhin eine Steuereinheit, welche eingerichtet ist, den Aktuator in Abhängigkeit von einer Erkennung eines Fahrzustandes zu aktivieren, um eine Bremsdruckregelung auszuführen. Der Fahrzustand ist beispielsweise ein kritischer Fahrzustand, wenn beim Bremsen ein Blockieren eines Rades des Zweirades vorliegt, sodass die Steuereinheit eine ABS-Regelung ermöglicht oder alternativ ein Fahrzustand beim Anhalten an einem Berg, sodass die Steuereinheit eine Berganfahrhilfe realisieren kann.

Die Unteransprüche zeigen bevorzugte Weiterbildungen der Erfindung.

Vorzugsweise ist die Gebereinrichtung am Bremshebel angeordnet. Dadurch kann ein besonders kompakter und platzsparender sowie gewichtsoptimierter Aufbau der Bremseinrichtung erreicht werden.

Weiter bevorzugt umfasst die Bremseinrichtung eine Sperreinrichtung, um eine Hebelposition des Bremshebels festzustellen. Durch dieses Feststellen kann der Bremshebel durch einen Fahrer nicht mehr weiter betätigt werden und die Steuereinheit kann eine Druckregelung des Hydraulikdrucks im Hydrauliksystem der Bremseinrichtung ohne einen Fahrereingriff ermöglichen. Hierdurch kann eine ABS-Funktion als auch eine Berganfahrhilfe-Funktion realisiert werden.

Besonders bevorzugt ist die Sperreinrichtung an einem Drehpunkt des Bremshebels angeordnet. Dies ermöglicht einen besonders platzsparenden Aufbau.

Die Sperreinrichtung weist vorzugsweise eine Vielzahl von rotierbaren Armen auf, welche um einen gemeinsamen Mittelpunkt rotieren. Der gemeinsame Mittelpunkt ist besonders bevorzugt der Drehpunkt des Bremshebels.

Weiter bevorzugt umfasst die Sperreinrichtung vorzugsweise eine Vielzahl von Blockierelementen, wobei jedes Blockierelement um eine eigene Achse drehbar ist. Eine Anzahl der Blockierelemente ist dabei gleich der Anzahl der rotierbaren Arme der Sperreinrichtung, wobei jedem rotierbaren Arm ein Blockierelement zugeordnet ist, um diesen Arm zu blockieren. Die Arme sind vorzugsweise unflexibel. Nach einem vorbestimmten Umfangsweg kommen die rotierbaren Arme dabei mit den Blockierelementen in Kontakt. Dadurch drehen sich die Blockierelemente noch um eine vorbestimmte Wegstrecke um die eigene Achse, bis der endgültige Blockierzustand erreicht ist und die rotierbaren Arme nicht mehr weiter gedreht werden können. Dadurch kann dann der Bremshebel nicht mehr weiter betätigt werden. Hierdurch wird ein maximaler, mittels des Bremshebels auf das Hydrauliksystem der Bremseinrichtung ausübbarer Druck durch den Fahrer begrenzt.

Besonders bevorzugt sind die rotierbaren Arme mit dem Aktuator des Aktuatorkolbens der Gebereinrichtung gekoppelt. Hierdurch hat der Aktuator der Gebereinrichtung neben der Funktion der Betätigung des Aktuatorkolbens noch die Funktion der Betätigung der rotierbaren Arme. Hierdurch ist ein besonders einfacher und kompakter Aufbau möglich. Alternativ weisen die rotierbaren Arme einen eigenen Antrieb auf, welcher vorzugsweise alle rotierbaren Arme gemeinsam antreibt. Der eigene Antrieb ist vorzugweise in einem Drehpunkt der rotierbaren Arme angeordnet.

Gemäß einer alternativen Ausgestaltung der vorliegenden Erfindung umfasst die Sperreinrichtung ein Rückschlagventil mit einem Schließelement, welches an einem Dichtsitz abdichtet. Die Sperreinrichtung umfasst ferner einen Stift oder dergleichen, wobei der Stift am Aktuatorkolben angeordnet ist. Das Rückschlagventil ist hierbei im Zylinder der Gebereinrichtung zwischen dem Aktuatorkolben und dem Geberkolben angeordnet. Der Stift ist ferner derart am Aktuatorkolben angeordnet, dass durch Bewegung des Aktuatorkolbens das Schließelement aktiv vom Dichtsitz abgehoben werden kann, sodass das Rückschlagventil öffnet.

Gemäß einer weiteren bevorzugten Ausgestaltung umfasst die Sperreinrichtung mit Rückschlagventil ferner ein Rückstellelement, um das Rückschlagventil in einen Ausgangszustand zurückzustellen. Das Rückstellelement ist vorzugsweise eine Feder. Die Feder ist bevorzugt am Rückschlagventil angeordnet und hält das Rückschlagventil im unbelasteten Zustand in der Offenstellung oder alternativ ist die Feder am Aktuatorkolben angeordnet und bringt im unbelasteten Zustand eine Federkraft auf den Aktuatorkolben derart auf, dass das Rückschlagventil durch den Stift geöffnet wird.

Ferner betrifft die vorliegende Erfindung ein Zweirad, insbesondere ein Fahrrad, und besonders bevorzugt ein Elektrofahrrad, mit einer erfindungsgemäßen Bremseinrichtung.

Weiterhin betrifft die vorliegende Erfindung ein Verfahren zur aktiven Bremskrafteinstellung einer Bremseinrichtung eines Zweirades. Die Bremseinrichtung umfasst dabei einen Bremshebel, ein Hydrauliksystem, ein Radbremssystem und eine Gebereinrichtung. Die Gebereinrichtung weist einen Geberkolben, einen Zylinder und einen Aktuatorkolben auf, wobei der Geberkolben und der Aktuatorkolben im Zylinder angeordnet sind. Das Verfahren umfasst dabei die Schritte des Erkennens eines Fahrzustands des Zweirads, bei dem eine Bremskraftregelung notwendig ist und ein Aktivieren des Aktuatorkolbens, um einen Bremsdruck am Radbremssystem zu regeln. Der Bremsdruck kann dabei aufgebaut, abgebaut oder auch gehalten werden. Weiter bevorzugt ist insbesondere der Bremshebel während der Bremsdruckregelung gesperrt. Dadurch ist es für einen Nutzer des Zweirads nicht möglich, während einer Bremsdruckregelung zusätzlich mittels des Bremshebels Bremsdruck aufzubauen oder abzubauen.

### Kurze Beschreibung der Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Darstellung einer Bremseinrichtung eines Zweirads gemäß einem ersten Ausführungsbeispiel der Erfindung,
- Figur 2: eine schematische Darstellung einer Bremseinrichtung eines Zweirads gemäß einem zweiten Ausführungsbeispiel der Erfindung,
- Figur 3: eine Detailansicht einer Sperreinrichtung von Figur 2,
- Figur 4: eine schematische Darstellung einer Bremseinrichtung eines Zweirads gemäß einem dritten Ausführungsbeispiel der Erfindung,
- Figur 5: eine schematische Darstellung einer Gebereinrichtung einer Bremseinrichtung gemäß einem vierten Ausführungsbeispiel in geöffneter Position,
- Figur 6: eine schematische Darstellung der Gebereinrichtung von Figur 5 in geschlossener Position und
- Figur 7: eine schematische Darstellung einer Gebereinrichtung einer Bremseinrichtung gemäß einem fünften Ausführungsbeispiel in geöffneter Position.

### Bevorzugte Ausführungsformen der Erfindung

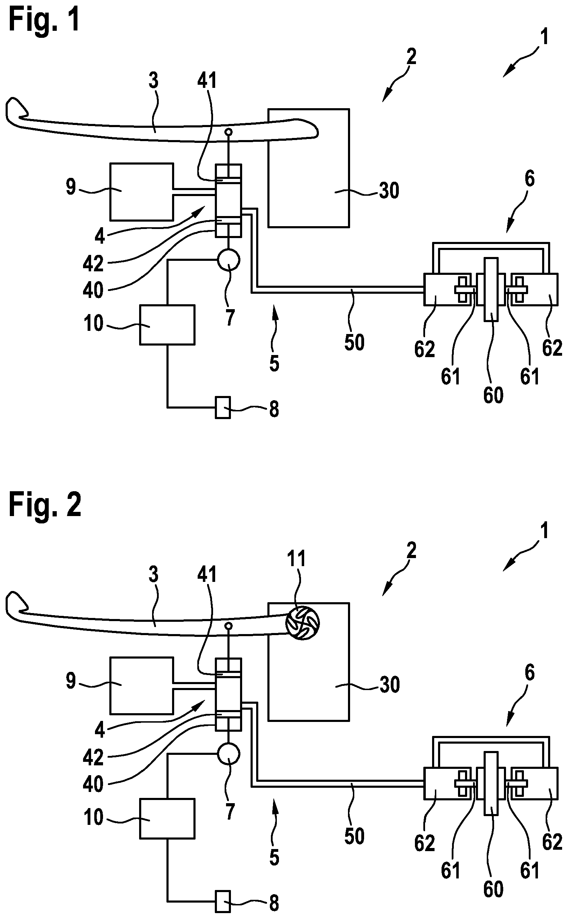

Nachfolgend wird unter Bezugnahme auf Figur 1 ein Zweirad 1 mit einer Bremseinrichtung 2 gemäß einem ersten bevorzugten Ausführungsbeispiel der Erfindung im Detail beschrieben.

Wie aus Figur 1 ersichtlich ist, umfasst die Bremseinrichtung 2 einen Bremshebel 3 sowie eine Gebereinrichtung 4. Die Gebereinrichtung 4 ist unmittelbar am Bremshebel 3 angeordnet. Dadurch kann ein sehr kompakter und platzsparender Aufbau erreicht werden.

Der Bremshebel 3 ist an einer schematisch dargestellten Lenkerstange 30 des Zweirads 1 angeordnet.

Die Gebereinrichtung 4 ist Zylinder-Kolben-Einrichtung und umfasst einen Zylinder 40, einen Geberkolben 41 und einen Aktuatorkolben 42. Wie aus Figur 1 ersichtlich ist, sind der Geberkolben 41 und der Aktuatorkolben 42 einander gegenüberliegend angeordnet. Der Geberkolben 41 ist dabei mit dem Bremshebel 3 gekoppelt, was in Figur 1 schematisch dargestellt ist.

Die Gebereinrichtung 4 ist Teil eines Hydrauliksystems 5, welches zusätzlich noch ein Reservoir 9 für ein Hydraulikfluid, beispielsweise Öl oder dergleichen, umfasst.

Wie aus Figur 1 ersichtlich ist, ist das Reservoir 9 mit dem Zylinder 40 der Gebereinrichtung 4 verbunden. Hierbei mündet eine Leitung vom Reservoir 9 in einen Zwischenbereich zwischen den beiden Kolbenflächen des Geberkolbens 41 und des Aktuatorkolbens 42. Vom Zwischenbereich zwischen den beiden Kolben geht ferner eine hydraulische Leitung 50 ab, welche zu einem Radbremssystem 6 führt.

Das Radbremssystem 6 ist schematisch dargestellt und kann sowohl nur an einem Rad oder auch am Hinterrad und am Vorderrad des Zweirads 1 angeordnet sein. Das Radbremssystem 6 umfasst eine Bremsscheibe 60 sowie zwei Radbremskolben 61 und zwei Radbremszylinder 62.

Die Bremseinrichtung 2 umfasst ferner eine Steuereinheit 10 sowie einen Aktuator 7. Der Aktuator 7 ist mit dem Aktuatorkolben 42 verbunden und kann diesen im Zylinder 40 hin- und herbewegen.

Ein Sensor 8 ist mit der Steuereinheit 10 verbunden und nimmt Fahrdaten des Zweirads auf, sodass die Steuereinheit 10 eine kritische Fahrsituation des Zweirads 1 ermitteln kann. Eine kritische Fahrsituation ist beispielsweise bei einem Bremsvorgang ein Blockieren eines Rades des Zweirads.

Im normalen Betrieb wird bei einem Bremswunsch der Bremshebel 3 des Zweirads betätigt, sodass ein Druck im Zylinder 40 ansteigt. Der Druck wird über die hydraulische Leitung 50 zum Radbremssystem 6 geleitet und drückt die Radbremskolben 61, an dessen Enden in bekannter Weise Bremsklötze oder dergleichen fixiert sind, gegen die Bremsscheibe 60, um einen Bremsvorgang einzuleiten. Beim normalen Bremsvorgang wird der Aktuator 7 nicht betätigt.

Sobald die Steuereinheit 10 einen kritischen Fahrzustand ermittelt, wird der Aktuator 7 aktiviert, um den Aktuatorkolben 42 zu bewegen. Hierbei kann durch ein Heranziehen des Aktuatorkolbens 42 in Richtung des Aktuators 7 eine Druckreduzierung im Hydrauliksystem 5 erreicht werden, um ein Blockieren der Bremse wieder aufzuheben. Der Aktuator 7 ist jedoch auch ferner in der Lage, den Aktuatorkolben 42 in die entgegengesetzte Richtung in Richtung zum Geberkolben 41 zu bewegen, wodurch ein Druck im Hydrauliksystem erhöht werden kann, wenn beispielsweise eine Notsituation vorliegt und ein durch den Fahrer über den Bremshebel erzeugter Bremsdruck nicht ausreichend für eine optimale Verzögerung des Zweirads ist.

Die erfindungsgemäße Bremseinrichtung 2 ist ferner auch in der Lage, eine Berganfahrhilfe bereitzustellen. Hier kann beispielsweise ein Neigungssensor eine Stellung des Zweirads am Berg erfassen und die Steuereinheit 10 basierend auf der erfassten Neigung den Aktuator 7 betätigen, um den Aktuatorkolben 42 in Richtung zum Geberkolben 41 zu bewegen. Hierdurch steigt der Druck im Hydrauliksystem 5 an, sodass die Radbremse betätigt wird. Dadurch wird das Zweirad am Berg mit angelegten Bremsen gehalten und ein Fahrer kann dann aus dem Stand die Fahrt aufnehmen.

Somit ist die erfindungsgemäße Bremseinrichtung 2 in der Lage, in Abhängigkeit einer Fahrsituation des Zweirads einen Hydraulikdruck im Hydrauliksystem 5 zu erhöhen, zu halten oder zu reduzieren.

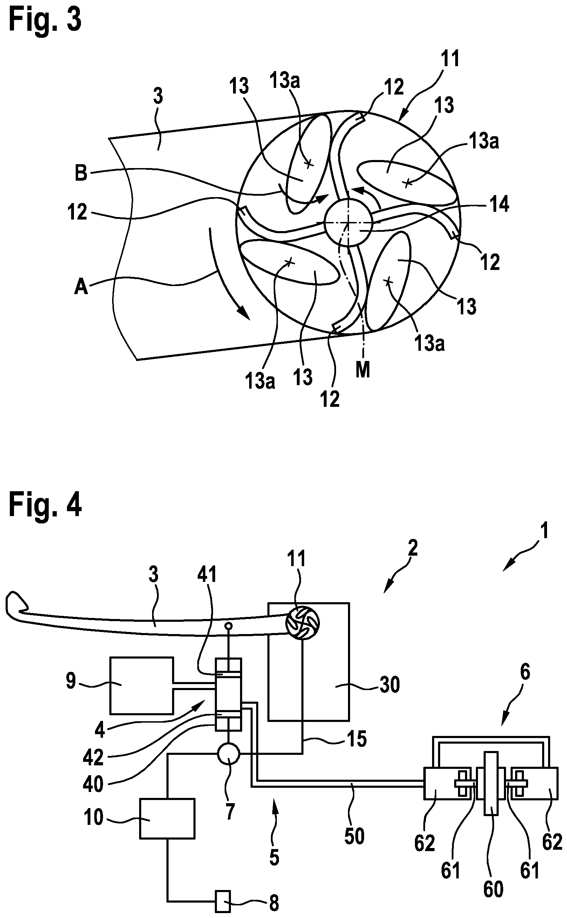

Die Figuren 2 und 3 zeigen ein Zweirad mit einer Bremseinrichtung 2 gemäß einem zweiten bevorzugten Ausführungsbeispiel der Erfindung. Das zweite Ausführungsbeispiel entspricht im Wesentlichen dem ersten Ausführungsbeispiel, wobei zusätzlich noch eine Sperreinrichtung 11 zum Sperren einer Bewegung des Bremshebels 3 vorgesehen ist. Wie aus Figur 2 ersichtlich ist, ist die Sperreinrichtung 11 in einem Drehpunkt des Bremshebels 3 angeordnet.

Die Sperreinrichtung 11 ist im Detail in Figur 3 gezeigt. Wie aus Figur 3 ersichtlich ist, umfasst die Sperreinrichtung 11 vier Arme 12, welche aus einem festen, unflexiblen Material hergestellt sind. Ferner umfasst die Sperreinrichtung 11 vier Blockierelemente 13. Die Blockierelemente 13 sind beispielsweise Lamellen, welche jeweils um einen Mittelpunkt 13a jedes Blockierelements 13 schwenkbar sind. Dies ist in Figur 3 durch den Pfeil B angedeutet.

Der Pfeil A in Figur 3 verdeutlicht, dass die vier Arme 12 um einen Mittelpunkt M schwenken können. Hierbei ist am Mittelpunkt M ein separater Antrieb 14 zum Drehen der Arme 12 angeordnet. Der Blockiervorgang erfolgt dabei derart, dass die Arme 12 in Richtung des Pfeils A bewegt werden, bis die Arme 12 jeweils mit einem Blockierelement 13 in Kontakt kommen. Hierdurch drehen sich die einzelnen Blockierelemente 13 solange, bis eine Längsachse der Blockierelemente 13 parallel zu einer Längsachse der Arme 12 ist und ein Drehen der Blockierelemente 13 nicht mehr möglich ist. Dann ist der Bremshebel 3 blockiert. Durch das Blockieren des Bremshebels 3 ist es für einen Fahrer des Zweirads nicht mehr möglich, einen weiteren Druck im Hydrauliksystem 5 über den Bremshebel 3 aufzubauen. Hierdurch kann dann der Druck im Hydrauliksystem 5 ausschließlich über die Steuereinheit 10 gesteuert werden und entsprechend den jeweiligen Fahrsituationen angepasst werden. Wenn nun beispielsweise der Aktuatorkolben 42 in Richtung zum Geberkolben 41 bewegt wird, kann ein zusätzlicher Druckaufbau erfolgen, um eine Bremskraft am Radbremssystem 6 zu erhöhen. Die Sperrung des Bremshebels 3 ermöglicht somit eine vom Fahrer völlig unabhängige Bremsung des Zweirads. Durch die Sperreinrichtung 11 kann ferner auch auf einfache Weise die Berganfahrhilfe realisiert werden.

Figur 4 zeigt ein Zweirad mit einer Bremseinrichtung 2 gemäß einem dritten Ausführungsbeispiel der Erfindung. Das dritte Ausführungsbeispiel entspricht im Wesentlichen dem ersten Ausführungsbeispiel und umfasst ebenfalls eine Sperreinrichtung 11 zum Sperren des Bremshebels 3. Im Unterschied zum zweiten Ausführungsbeispiel ist beim dritten Ausführungsbeispiel jedoch kein separater Antrieb für die Sperreinrichtung 11 vorgesehen, sondern die Sperreinrichtung 11 ist über eine Koppeleinrichtung 15 mit dem Aktuator 7 verbunden. Hierdurch kann auf den zusätzlichen Antrieb in der Sperreinrichtung 11 verzichtet werden. Die Koppeleinrichtung 15 kann beispielsweise ein mechanisches Gestänge oder dergleichen sein. Durch die Kopplung der Sperreinrichtung 11 mit dem Aktuator 7 kann somit insbesondere bei einem Druckaufbau gleichzeitig auch automatisch die Sperreinrichtung 11 betätigt werden, sodass der Bremshebel 3 bei einem Druckaufbau über die Steuereinheit 10 immer gesperrt ist und ein Fahrer nicht zusätzlich einen Druck im Hydrauliksystem aufbauen oder abbauen kann.

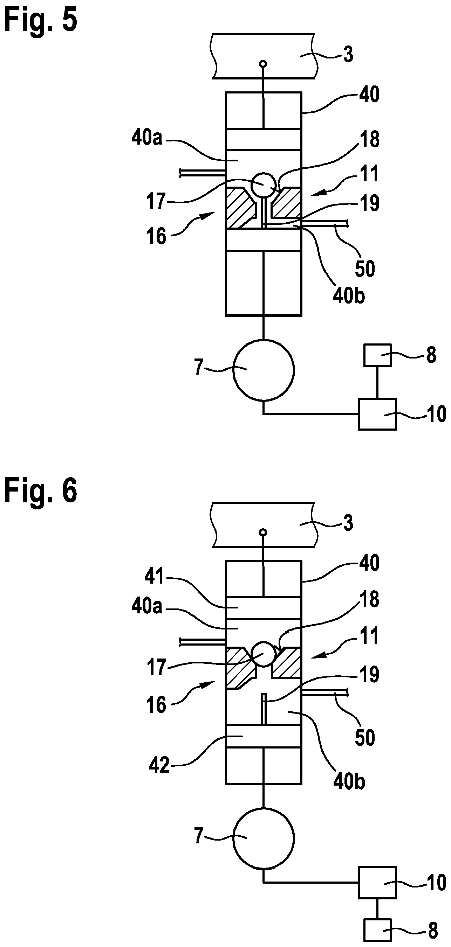

In den Figuren 5 und 6 ist schematisch eine alternative Sperreinrichtung 11 dargestellt. Die Sperreinrichtung 11 des vierten Ausführungsbeispiels umfasst ein Rückschlagventil 16 mit einem Schließelement 17, welches an einem Dichtsitz 18 einen Durchlass freigeben oder verschließen kann. Figur 5 zeigt dabei den geöffneten Zustand des Rückschlagventils 16 und Figur 6 den geschlossenen Zustand des Rückschlagventils 16. Das Rückschlagventil 16 ist dabei in der Gebereinrichtung 4, genauer im Zylinder 40, zwischen dem Geberkolben 41 und dem Aktuatorkolben 42 angeordnet. Hierdurch wird der Zylinderraum zwischen dem Geberkolben 41 und dem Aktuatorkolben 42 in zwei Räume unterteilt. Ein erster Raum 40a zwischen dem Geberkolben 41 und dem Rückschlagventil 16 ist mit dem Reservoir verbunden (in den Figuren 5 und 6 ist die Reservoire-Leitung angedeutet) und ein zweiter Raum 40b zwischen dem Rückschlagventil 16 und dem Aktuatorkolben 42 ist mit der hydraulischen Leitung 50 verbunden. Ferner ist am Aktuatorkolben 42 noch ein Stift 19 an der in Richtung zum Geberkolben 41 gerichteten Kolbenseite angeordnet. Der Stift 19 dient dabei zum Öffnen des Rückschlagventils 16, indem der Stift 19 das Schließelement 17, welches in diesem Ausführungsbeispiel eine Kugel ist, vom Dichtsitz 18 abhebt. Figur 5 zeigt hierbei den geöffneten Zustand des Rückschlagventils. Figur 6 zeigt den geschlossenen Zustand des Rückschlagventils 16, wobei der Aktuatorkolben 42 mit dem Stift 19 derart zurückgezogen ist, dass der Stift 19 außer Kontakt mit dem Schließelement 17 kommt. Das vierte Ausführungsbeispiel hat dabei den Vorteil, dass die Sperreinrichtung 11 hierbei in die Gebereinrichtung 4 integriert ist. Hierbei sind nur sehr kostengünstige Bauteile notwendig, sodass eine Bremseinrichtung 2 mit integrierter Sperreinrichtung 11 auf einfache und kostengünstige Weise realisiert werden kann.

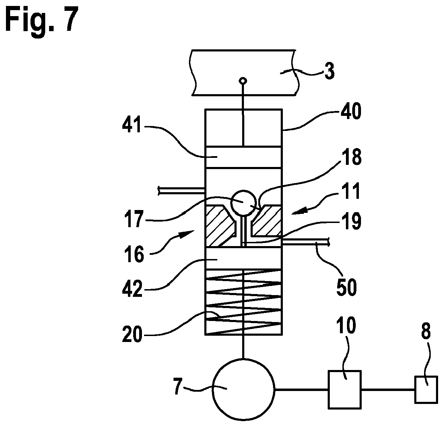

Figur 7 zeigt eine Bremseinrichtung 2 eines Zweirads gemäß einem fünften Ausführungsbeispiel der Erfindung. Das fünfte Ausführungsbeispiel entspricht im Wesentlichen dem vierten Ausführungsbeispiel und umfasst ebenfalls ein Rückschlagventil 16, welches in die Gebereinrichtung 4 integriert ist. Zusätzlich ist beim fünften Ausführungsbeispiel noch ein Rückstellelement 20 in Form einer Feder vorgesehen. Das Rückstellelement 20 ist an der vom Geberkolben 41 abgewandten Seite des Aktuatorkolbens 42 angeordnet (vgl. Figur 7). Hierbei ist die Ruhestellung des Systems derart, dass das Rückschlagventil 16 geöffnet ist, sodass die normale Bremsfunktion bei Betätigung des Bremshebels 3 möglich ist. Das fünfte Ausführungsbeispiel mit dem Rückstellelement 20 hat dabei insbesondere den Vorteil, dass in einem möglichen Fehlerfall ein neutrales Verhalten der Sperreinrichtung sichergestellt ist, sodass ein Bremsen des Zweirads über den normalen Bremshebel 3 immer möglich ist.

Zu allen Ausführungsbeispielen sei angemerkt, dass die erfindungsgemäße Bremseinrichtung 2 hierbei bei allen Arten von Zweirädern, insbesondere motorisierten Zweirädern, Fahrrädern oder auch Elektrofahrrädern verwendet werden kann.

## Patentansprüche

1. Bremseinrichtung mit aktiver Bremskrafteinstellung für ein Zweirad (1) oder dergleichen, umfassend
- eine Gebereinrichtung (4) mit einem Geberkolben (41), einem Zylinder (40) und einem Aktuatorkolben (42),
- ein Hydrauliksystem (5) zur Übertragung eines Fluiddrucks von der Gebereinrichtung (4) zu einem Radbremssystem (6),
- einen Bremshebel (3), welcher mit dem Geberkolben (41) verbunden ist,
- einen Aktuator (7), welcher mit dem Aktuatorkolben (42) zur Betätigung des Aktuatorkolbens (42) verbunden ist und
- eine Steuereinheit (10), welche eingerichtet ist, den Aktuator (7) in Abhängigkeit von einer Erkennung eines Fahrzustandes des Zweirads zu aktivieren, um einen Bremsdruck im Hydrauliksystem (5) zu regeln.

2. Bremseinrichtung nach Anspruch 1, wobei die Gebereinrichtung (4) am Bremshebel (3) angeordnet ist.

3. Bremseinrichtung nach einem der vorhergehenden Ansprüche, ferner umfassend eine Sperreinrichtung (11), um eine Position des Bremshebels (3) festzustellen.

4. Bremseinrichtung nach Anspruch 3, wobei die Sperreinrichtung (11) an einem Drehpunkt des Bremshebels (3) angeordnet ist.

5. Bremseinrichtung nach einem der Ansprüche 3 oder 4, wobei die Sperreinrichtung (11) eine Vielzahl von rotierbaren Armen (12) aufweist, die um einen gemeinsamen Mittelpunkt (M) rotierbar sind.

6. Bremseinrichtung nach Anspruch 5, ferner umfassend eine Vielzahl von Blockierelementen (13), wobei jedes Blockierelement (13) um eine eigene Mittelachse (13a) drehbar ist, wobei eine Anzahl der Blockierelemente (13) gleich ist wie eine Anzahl der Arme (12) und jedem Arm (12) ein Blockierelement (13) zugeordnet ist, um den Arm (13) zu blockieren.

7. Bremseinrichtung nach Anspruch 5 oder 6, wobei die rotierbaren Arme (12) mit dem Aktuator (7) des Aktuatorkolbens (42) gekoppelt sind, oder wobei die rotierbaren Arme (12) einen eigenen Antrieb (14) aufweisen.

8. Bremseinrichtung nach Anspruch 3, wobei die Sperreinrichtung (11) ein Rückschlagventil (16) mit einem Schließelement (17) und einem Dichtsitz (18) sowie einen Stift (19) umfasst, wobei der Stift (19) am Aktuatorkolben (42) angeordnet ist und wobei das Rückschlagventil (16) im Zylinder (40) der Gebereinrichtung (4) zwischen dem Geberkolben (41) und dem Aktuatorkolben (42) angeordnet ist.

9. Bremseinrichtung nach Anspruch 8, ferner umfassend ein Rückstellelement (20), um den Aktuatorkolben (22) in eine Ausgangsposition zurückzustellen, in welcher das Rückschlagventil (16) geöffnet ist.

10. Zweirad umfassend eine Bremseinrichtung nach einem der vorhergehenden Ansprüche.

11. Verfahren zur aktiven Bremskrafteinstellung einer Bremseinrichtung eines Zweirads, wobei die Bremseinrichtung einen Bremshebel (3), ein Hydrauliksystem (5), ein Radbremssystem (6) und eine Gebereinrichtung (4) mit einem in einem Zylinder angeordneten Geberkolben und einem Aktuatorkolben aufweist, umfassend die Schritte:
- Erkennen eines Fahrzustands des Zweirades, bei welchem eine Bremsdruckregelung notwendig ist, und
- Aktivieren des Aktuatorkolbens, um einen Bremsdruck am Radbremssystem (6) aufzubauen oder abzubauen oder zu halten.

12. Verfahren nach Anspruch 11, wobei der Bremshebel während der Bremsdruckregelung gesperrt ist.
